# EUROPEAN PATENT SPECIFICATION

(11) **EP 4 498 823 B1**
(45) Date of publication and mention of the grant of the patent: **18.03.2026**
(21) Application number: 23711103.4
(22) Date of filing: 22.03.2023
(51) Int. Cl.: A21D 13/24, A21D 13/28, A23G 9/48, A23D 9/007, A23G 1/30, A23G 1/32, A23G 1/36, A23G 9/32

(54) **FAT-BASED CONFECTION COMPOSITIONS COMPRISING CALCIUM CARBONATE**
KALZIUMCARBONATHALTIGE KONFEKTZUSAMMENSETZUNGEN AUF FETTBASIS
COMPOSITIONS DE CONFISERIE À BASE DE MATIÈRE GRASSE COMPRENANT DU CARBONATE DE CALCIUM

(30) Priority: 31.03.2022 EP 22166166
(43) Date of publication of application: 05.02.2025
(73) Proprietor: MAGNUM IP HOLDINGS B.V., 1017 BM Amsterdam (NL)
(72) Inventor: FRITH, William, James, 6708 WH Wageningen (NL); HEDGES, Nicholas, David, 6708 WH Wageningen (NL); LIU, Chujiao, 6708 WH Wageningen (NL)
(74) Representative: Potter Clarkson
(86) International application number: PCT/EP2023/057274
(87) International publication number: WO 2023/186642

(56) References cited:
- EP-A2- 1 104 656
- EP-B1- 2 367 441
- US-A1- 2020 187 538
- US-A1- 2021 244 043
- US-B2- 8 105 640
- R SAMBANTHAMURTHI: "Chemistry and biochemistry of palm oil", PROGRESS IN LIPID RESEARCH, vol. 39, no. 6, 1 November 2000 (2000-11-01), pages 507 - 558, XP055224237, ISSN: 0163-7827, DOI: 10.1016/S0163-7827(00)00015-1

## Description

### Field of the Invention

Fat-based confection compositions comprising calcium carbonate, use of such compositions for coating confection products, and confection products comprising the fat-based confection compositions.

### Background of the Invention

Frozen confection products may comprise a fat-based confection composition, for example chocolate or chocolate analogue compositions. The formulation, size distribution of the particles and temperature of the composition affect the physical properties of the composition, e.g. the rheology (The Science of Ice Cream: C. Clarke; RSC 2012, Ch 5).

In order to reduce the calorie content of a fat-based confection composition, one solution includes substituting one or more ingredients of the composition with an ingredient of lower caloric value. The substitute may be, for example, a bulking agent or a modified bulking agent. Typically, these bulking agents are fibrous materials such as microcrystalline cellulose (US 5,342,636). Alternatively, the substitute may be a surface-reacted calcium carbonate (US 2020/0187538 A1). However, the amount of substitution of one or more ingredients by a bulking agent is limited because such bulking agents absorb oil. Absorption of oil by the bulking agent and/or surface reacted calcium carbonate removes oil from the continuous fat phase of the composition, consequently modifying the sensorial and rheological properties of the composition. In order to achieve similar sensorial and rheological properties for a fat-based confection composition comprising bulking agents or surface-reacted calcium carbonate, the composition would require the addition of fat to the composition. An increase in oil content of a fat-based composition increases the calorie content of the composition.

Alternative particle sizes of ingredients may be used in fat-based confection compositions to modify the rheological properties of a fat-based confection composition. EP 3 250 042 A1 discloses a fat- and/or oil-based dispersion comprising up to 50 wt% crystalline, semi-crystalline or amorphous organic or inorganic submicron ground particles or a mixture thereof and at least one emulsifier. The submicron ground particles [SMGP] disclosed may have a particle size of between 0.1 and 1 micron and more than 50 vol% within a size range of 0.1 to 0.3 microns. EP 3 250 042 A1 discloses that the addition of submicron ground particles [SMGP] to a fat-based composition results in a constant or increased viscosity, wherein the plastic viscosity increases at a lower rate than the yield value.

EP2367441B1 discloses coating compositions comprising 59.2% palm mid fraction, the remaining 40.8% being non-fat solid particles of sugar, cocoa powder, skim milk powder, and ammonium phosphatide.

US2021/244043A1 discloses concentrations of about 21% by weight calcium carbonate and also calcium carbonate powders having a median particle size of 3-4 µm.

US8105640B2 discloses concentrations of 15 wt % to 30 wt % of calcium carbonate and also calcium carbonate particles having a median particle size of 1.5 µm to about 3 µm.

EP1104656A2 discloses the use of calcium carbonate particles with an average particle size of 2.5 microns or less as a substitute for edible oil and fat.

In addition to substituting one or more ingredients of the fat-based confection composition with an ingredient of lower caloric value or modifying the particle size of the ingredients to effect rheology of the composition, it is also desirable to reduce the saturated fatty acid [SAFA] content of a fat-based composition as products with reduced saturated fatty acid contents are considered healthier. However, the saturated fatty acid content of a fat-based confection composition contributes to the solid fat content of a fat-based composition, directly affecting the solidity of, for example, a product at ambient (room temperature), the speed of the solidification in the manufacturing process, and the physical characteristics that define the sensory characteristics of the product, such as brittleness that enables a cracking sound when, for example, a consumer bites into a coated frozen confection product. Typically, fat-based confection compositions comprise fats that have a high saturated fatty acid content such as cocoa butter [57 to 64 wt% SAFA] or coconut oil [92 wt% SAFA].

In order to obtain a confection product having a sufficient calorie reduction, there is a need to be able to reduce both the calorie content of the fat-based confection composition and the amount of fat-based confection composition present per product. Furthermore, reduction in the saturated fatty acid content of fat-based confection compositions is advantageous because products having a reduced saturated fatty acid content are considered healthier. In addition to reducing the calorie and saturated fatty acid content of a fat-based confection composition, it is typically necessary that the same or similar physical and sensorial properties are achieved. The use of a fat-based confection composition for coating a frozen confection to obtain a coated frozen confection product typically requires that the coating is uniform and well defined, in addition to achieving the same or similar brittleness. For example, a fat-based confection composition that replaces a coating such as chocolate, i.e. a coating that would have a brittleness that results in an audible crack on biting, would require that the fat-based confection composition has the same or similar brittleness in order for the fat-based confection composition to be a suitable substitution.

### Summary of the Invention

It has now been discovered that partial substitution of the non-fat solids of a fat-based confection composition with calcium carbonate, results in a fat-based confection composition that is lower calorie, lower in saturated fat, and has rheological properties (reduced Casson viscosity and increased Casson yield) that enable a smaller amount of fat-based confection composition to be present per product. Furthermore, use of the fat-based confection composition as a coating for frozen confection results in a uniform coverage of the frozen confection, regardless of the fact that fat-based confection compositions comprising calcium carbonate have a smaller volume per gram compared to a fat-based confection composition comprising non-fat solids only. Additionally, and advantageously, the definition of the contours of the coated frozen confection product are significantly improved.

More specifically, the present invention relates to a fat-based confection composition comprising:
- from 35 wt% to 65 wt% fat;
- from 35 wt% to 65 wt% non-fat solid particles, wherein the non-fat solid particles comprise calcium carbonate;
- from 10 wt% to 35 wt% SAFA; and
- from 0.05 wt% to 1.0 wt% emulsifier,
wherein fat-based confection composition comprises from 1 wt% to 40 wt% calcium carbonate, and the calcium carbonate has a volume median particle size diameter (Dᵥ₅₀) of from 1.2 microns to 8 microns and does not comprise surface reacted calcium carbonate having a specific surface area of from 15 m²/g to 200 m²/g. The invention also relates to use of a fat-based confection composition for coating a frozen confection or bakery item, and to a confection product comprising the fat-based confection composition.

### Detailed Description of the Invention

A fat-based confection composition comprising:
- from 35 wt% to 65 wt% fat;
- from 35 wt% to 65 wt% non-fat solid particles, wherein the non-fat solid particles comprise calcium carbonate;
- from 10 wt% to 35 wt% SAFA; and
- from 0.05 wt% to 1.0 wt% emulsifier,
wherein the fat-based confection composition comprises from 1 wt% to 40 wt% calcium carbonate, and the calcium carbonate has a median particle size diameter (D₅₀) of from 1.2 microns to 8 microns and does not comprise surface reacted calcium carbonate having a specific surface area of from 15 m²/g to 200 m²/g.

The fat-based confection composition preferably comprises from 1 wt% to 40 wt% calcium carbonate, from 35 wt% to 65 wt% fat, from 20 wt% to 45 wt% sugar, from 2 wt% to 15 wt% cocoa powder, from 0.05 wt% to 1.0 wt% emulsifier, from 10 wt% to 35 wt% SAFA, and wherein the calcium carbonate has a median particle size diameter (D₅₀) of from 1.2 microns to 8 microns and does not comprise surface reacted calcium carbonate having a specific surface area of from 15 m²/g to 200 m²/g.

Fat-based confection composition means a confectionery composition comprising non-fat solid particles dispersed in a continuous fat phase. Continuous fat phase means a composition comprising triglycerides. Non-fat solid particles include, for example: calcium carbonate, particles originating from cocoa solids (i.e. cocoa powder), milk products such as skimmed milk powder (for milk-varieties), bulking agents, and sugar. Fat-based confection compositions may also comprise emulsifiers, flavourings, and colourings.

The fat-based confection composition comprises from 35 wt% to 65 wt% non-fat solid particles. The non-fat solid particles comprise calcium carbonate, wherein the calcium carbonate has a median particle size diameter (D₅₀) of from 1.2 microns to 8 microns and does not comprise surface reacted calcium carbonate having a specific surface area of from 15 m²/g to 200 m²/g. In an embodiment of the invention, non-fat solid particles are selected from the group consisting of calcium carbonate, sugars, particles originating from cocoa solids, non-fat milk solids, bulking agents, and mixtures thereof.

The bulking agent may be an insoluble fibre derived from plant-based material, soluble fibres derived from starches, pectins and cellulosic materials, soluble proteins, for example, vegetable proteins, insoluble vegetable proteins, and insoluble minerals, for example calcium phosphate.

Calcium carbonate means natural ground or precipitated calcium carbonate. Calcium carbonate does not mean calcium carbonate having porous particles, i.e. particles having intraparticle pores and a specific surface area of from 15 m²/g to 200 m²/g, such as surface reacted calcium carbonate such as those disclosed in US 2020/0187538 A1. Calcium carbonate means particles having a specific surface area of from 1 m²/g to 12 m²/g, from 1.5 m²/g to 11 m²/g, from 2.0 m²/g to 10 m²/g.

The fat-based confection composition comprises from 1 wt% to 40 wt% calcium carbonate, preferably from 5 wt% to 35 wt% calcium carbonate, more preferably from 10 wt% to 30 wt% calcium carbonate, more preferably from 10 wt% to 25 wt% calcium carbonate.

The calcium carbonate has a volume median particle size diameter (Dᵥ₅₀) of from 1.2 microns to 8 microns, preferably from 1.3 microns to 6 microns, more preferably from 1.4 microns to 5 microns, more preferably from 1.4 microns to 1.6 microns.

Volume median particle size, Dᵥ₅₀ value, measured using a Malvern Mastersizer 2000 Laser Diffraction System, indicates a diameter value such that 50% by volume of the particles have a diameter of less than this value. A method for measuring Dᵥ₅₀ is described in EP 3 250 042 A1.

Volume median particle size, Dᵥ₉₀ value, measured using a Malvern Mastersizer 2000 Laser Diffraction System, indicates a diameter value such that 90% by volume of the particles have a diameter of less than this value. A method for measuring Dᵥ₉₀ is described in EP 3 250 042 A1.

Fat-based confection composition means a confectionery composition comprising non-fat solid particles dispersed in a continuous fat phase. The continuous fat phase (fat content) is a composition comprising a blend of one or more fats, one or more oils, or one or more fats and one or more oils. Fats and oils may be obtained from natural sources such as plant, seed and dairy products, or fractions thereof, or prepared synthetically. Exemplary fats and oils include: palm oil, palm oil fractions such as palm stearin, palm kernel oil, cocoa butter, cocoa butter replacer, cocoa butter substitutes, cocoa butter equivalent, coconut oil, high oleic liquid oils, sunflower oil, safflower, canola oil, corn oil, olive oil, cottonseed oil, flax seed oil, almond oil, soybean oil, grapeseed oil, rice bran oil, hemp seed oil, sesame oil, peanut oil, butter oil, and mixtures thereof.

High oleic liquid oils include: high oleic sunflower oil, high oleic soy bean oil, high oleic safflower oil and high oleic canola oil. The term canola oil is synonymous with rapeseed oil.

In an embodiment of the invention, fat is selected from the group consisting of palm oil, palm oil fractions, cocoa butter, cocoa butter replacer, cocoa butter substitutes, cocoa butter equivalent, coconut oil, high oleic liquid oils, sunflower oil, safflower oil, canola oil, corn oil, olive oil, and mixtures thereof. US 2017/0318831 describes cocoa butter and cocoa butter substitutes, equivalent and replacer are interchangeable terms and mean cocoa butter interchangeable fats, such as illipe butter, Borneo tallow and Shea butter.

In an embodiment of the invention the fat is selected from the group consisting of palm oil, palm oil fractions, cocoa butter, coconut oil, high oleic liquid oils, sunflower oil, canola oil, safflower oil, olive oil, and mixtures thereof. In a preferred embodiment of the invention the fat is a blend of fats selected from the group consisting of palm oil, palm oil fractions, cocoa butter, coconut oil, high oleic liquid oils, sunflower oil, olive oil and mixtures thereof. Preferably, the fat is a blend of fats selected from the group consisting of cocoa butter, coconut oil, high oleic sunflower oil, high oleic safflower oil, high oleic canola oil, sunflower oil, and olive oil.

The fat-based confection composition comprises from 35 wt% to 65 wt% fat, preferably from 40 wt% to 65 wt% fat, from 45 wt% to 65 wt% fat, or even from 48 wt% to 55 wt% fat.

Fats and oils comprise triglycerides that comprise saturated or unsaturated fatty acid chains. Triglycerides may be monounsaturated (MUFA), polyunsaturated (PUFA) or saturated (SAFA).

The fat-based confection composition comprises from 10 wt% to 35 wt% SAFA, from 15 wt% to 30 wt% SAFA, from 20 wt% to 30 wt% SAFA, from 20 wt% to 29 wt% SAFA, from 21 wt% to 28 wt% SAFA.

In an embodiment of the invention the fat-based confection composition comprises from 45 wt% to 65 wt% fat and from 20 wt% to 29 wt% SAFA.

Sugars includes monosaccharides, disaccharides, oligosaccharides, polysaccharides, sugar alcohols, and mixtures thereof. Monosaccharides include: glucose; fructose; galactose; and, allulose. Disaccharides include: sucrose; lactose; and, trehalose. Oligosaccharides have a degree of polymerization (DP) between 3 and 10, for example: low molecular weight glucans, low molecular weight dextrins, maltodextrins and fructooligosaccharides (FOS). Polysaccharides typically have a DP greater than 10, for example: starch and inulin. Sugar alcohols include maltitol, xylitol, sorbitol, erythritol and mannitol. The sugar is preferably selected from the group consisting of monosaccharides, disaccharides, and mixtures thereof. Preferably sugar is selected from the group consisting of glucose, fructose, galactose, allulose, sucrose, lactose, trehalose and mixtures thereof.

Sugar typically provides sweetness to a fat-based confection composition. Sugars may be added to the fat-based confection composition as a sugar ingredient, or may be added as another component such as non-fat solid particle, for example, cocoa powder may comprise polysaccharides. 'Sugar' is intended to mean the total sugar content of the fat-based confection composition including both sugars originating from any ingredient and added sugar. 'Added sugar' means sugars that are added to the fat-based confection composition as a sugar ingredient, e.g.. sucrose.

The fat-based confection composition comprises from 5 wt% to 45 wt% sugar, for example from 20 wt% to 45 wt% sugar. Preferably the fat-based confection composition comprises from 10 wt% to 35 wt% sugar, preferably from 15 wt% to 30 wt% sugar, preferably from 20 wt% to 28 wt% sugar.

Cocoa powder is the cocoa press cake resulting from the processing of cocoa liquor obtainable from cocoa beans. Typically, cocoa powder comprises 10 wt% to 12 wt% fat and 88 wt% to 90 wt% non-fat cocoa solids (The Science of Ice Cream: C. Clarke; RSC 2012, Ch 3).

The emulsifier is preferably selected from the group consisting of lecithin, ammonium phosphatides, PGPR, and mixtures thereof. Lecithin may be, for example, sunflower lecithin or soybean lecithin. Preferably the emulsifier is selected from the group consisting of sunflower lecithin, soybean lecithin, and mixtures thereof.

In an embodiment of the invention the fat-based confection composition comprises from 0.05 wt% to 1.0 wt% emulsifier, from 0.1 wt% to 0.5 wt% emulsifier, from 0.15 wt% to 0.35 wt% emulsifier.

Fat-based confection compositions may also comprise additional ingredients such as one or more colourings and/or one or more flavourings. Exemplary colourings and flavourings are described in Chapter 3 of The Science of Ice Cream: C. Clarke; RSC 2012; and Chapter 4 of 'Ice Cream' 7th Ed., Goff and Hartel, 2013 Springer, New York.

In an embodiment of the invention the fat-based confection composition has a volume of from 0.55 ml to 0.98 ml per gram, from 0.65 ml to 0.96 ml per gram, from 0.70 ml to 0.90 ml per gram.

In an embodiment of the invention the fat-based confection composition has a Casson viscosity of from 0.05 Pa.s to 0.50 Pa.s measured at 40°C, from 0.07 Pa.s to 0.40 Pa.s measured at 40°C, from 0.10 Pa.s to 0.35 Pa.s measured at 40°C.

In an embodiment of the invention the fat-based confection composition has a Casson yield of the composition is from 0.05 Pa to 5.0 Pa measured at 40°C, from 0.15 Pa to 3.5 Pa measured at 40°C, from 0.2 Pa to 3.0 Pa measured at 40°C, from 0.5 Pa to 2.5 Pa measured at 40°C.

The fat-based confection composition is preferably prepared by a process comprises the steps of:
(a) mixing and kneading the fat-based confection composition ingredients to form a dispersion,
(b) refining the dispersion of step (a) until the Dᵥ₉₀ of the particles of the dispersion is less than 50 microns;
(c) optionally conching the dispersion of step (b);
(d) optionally fluidizing the dispersion of step (b) or (c).

Mixing and heating may be carried out in apparatus such as a ball mill. Admixing means the addition of ingredients into a dispersion. Kneading means working into a paste, for example using a kneading arm. Refining means grinding the dispersion in for example, a roll refiner. Conching means stirring and mixing, optionally with heating. Fluidizing means the addition of fat to the dispersion in order to adjust the fat content of the fat-based confection composition to achieve the desired rheology of the fat-based confection composition. Method steps and apparatus are described in Chapter 2 (Chocolate Manufacture, S. Beckett) of Science and Technology of Enrobed and Filled Chocolate, Confectionery and Bakery Products (2009, ISBN: 978-1-84569-390-9) and in Chapter 9 (Cocoa bean processing and the manufacture of chocolate) of The International Cocoa Trade by Robin Dand (2011, ISBN: 978-0-85709-125-3).

The invention also relates to use of the fat-based confection composition for coating a frozen confection or bakery item. Such use will form a coated frozen confection product, or a coated bakery item. A coated bakery item may be, for example: a biscuit; wafer cone or waffle cone, coated with the fat-based frozen confection composition, typically the coating is located on the internal surface of the cone. The coated bakery item may additionally comprise frozen confection (added after the coating has been applied) to form a frozen confection cone product. The fat-based confection composition may be present as a partial or full coating of a frozen confection to form a partially or fully coated frozen confection product. Alternatively, the fat-based confection composition may be present as a topping. Alternatively, the fat-based confection composition may be applied to a receptacle to coat the inside of the receptacle prior to addition of frozen confection, as described in WO 2017/001372 A1. Exemplary coated frozen confection products and apparatus and methods for coating are described in Chapter 5 of The Science of Ice Cream by Chris Clarke (2012, ISBN: 0-85404-629-1) and Chapter 9 of Ice Cream by H. Douglas Goff and Richard W. Hartel (2013, 7th Edition, ISBN: 978-1-4614-6096-1).

A fat-based confection composition for use as a coating for a frozen confection or frozen confection bakery item may also be known as a fat-based frozen confection coating composition or frozen confection coating composition.

Fat-based frozen confection coating composition means a composition that, when in liquid form and applied to the surface of a frozen confection or bakery item, solidifies on or shortly after contact with the frozen confection or bakery item. Frozen confection coating composition means a fat-based edible material for use to form a coating layer on the surface of a frozen confection or bakery item.

A coated frozen confection product may be made by a process comprising the steps of:
(a) heating the fat-based confection composition to a temperature of from 35°C to 55°C;
(b) dipping a frozen confection into the heated fat-based confection composition of step (a);
(c) cooling the coated frozen confection product of step (b).

The process may also comprise step (d):
(d) optionally hardening the cooled product of step (c).

An item may be coated by the frozen confection coating composition by spraying. For example, by a process for the preparation of a coated frozen confection product comprising the steps of:
(a) heating the fat-based confection composition to a temperature of from 35°C to 55°C;
(b) spraying the heated fat-based confection composition of step (a) onto an item;
(c) cooling the coated item of step (b).

The process may also comprise step (d):
(d) optionally hardening the cooled coated item of step (c).

The invention relates to the use of a fat-based confection composition for coating a frozen confection or bakery item.

In a further embodiment, the invention relates to the use of a fat-based confection composition for coating a frozen confection to obtain a coated frozen confection product, wherein the coating is applied by dipping, i.e. the frozen confection is dipped into a vessel comprising a fat-based confection composition.

In a further embodiment, the invention relates to the use of a fat-based confection composition for coating a frozen confection to obtain a coated frozen confection product, wherein the coating is applied by spraying.

Processes for dipping, spraying and coating are described in for example US 2017/0318831 A1 and WO 2017/001372 A1.

In a further embodiment, the invention relates to a confection product comprising the fat-based confection composition. For example, the confection product may comprise a frozen confection and the fat-based confection composition; and/or the confection product comprises a bakery item and the fat-based confection composition.

In a further embodiment of the invention, the invention relates to a coated frozen confection product comprising a fat-based confection composition, wherein the thickness of the coating of the coated frozen confection product varies by from 0% to 30%, from 1% to 20%, from 2% to 15%, from 3% to 13%.

In a further embodiment, the invention relates to a frozen confection product comprising a frozen confection and a fat-based confection composition, wherein the fat-based confection composition may be a sauce, inclusion, coating or topping.

### Figures

Fig 1: Coated frozen confection product comprising frozen confection coating composition corresponding to Example 1.
Fig 2: Coated frozen confection product comprising frozen confection coating composition corresponding to the Comparative Example.

### Examples

### General Method 1: Preparation of the fat-based confection composition

Sugar (sucrose) and calcium carbonate were added to a pre-heated mill grinding chamber [ball mill, 50°C] and mixed and kneaded. The remaining non-fat solids were added, and the mixture was kneaded and refined until the Dᵥ₉₀ of the particles of the mixture was less than 30 microns, measured using a Draper external digital micrometer. Fat and optional emulsifier were heated to 45°C and added to the refined non-fat solids mixture to form a dispersion. The resultant fat-based confection composition was removed from the mill, cooled to -25°C and stored.

### General Method 2: Preparation of the coated frozen confection product/ method for measuring thickness

Fat-based confection composition was prepared according to General Method 1 and heated to 40°C. A frozen confection stick product was prepared, exemplary frozen confections are described in The Science of Ice Cream: C. Clarke; RSC 2012. The frozen confection was held by the stick and dipped into the fat-based confection composition. The fat-based frozen confection composition was allowed to solidify and form a coated frozen confection product. The coated frozen confection product was sliced longitudinally and the fat-based confection composition coating thickness was measured using a Zeiss Smartzoom 5 digital microscope equipped with Smartzoom5.ink software v1.4. The thickness of the fat-based confection composition at several locations around the perimeter of the sample, an average thickness of the fat-based confection composition was calculated.

### General Method 3: General experimental method for measuring the rheology of the frozen confection coating composition

Chocolate and oil rheology measurements were made on a Physica MCR501 at 40°C using a 17mm profiled cup and bob (cc17-0-25/p6 and c-cc17/T200/SS/P).

The method was a step method:
Step 1 is a pre-shear to condition the material at a shear rate of 5 1/s
Step 2 is shear rate ramp from 2 to 50 1/s over 3 mins
Step 3 constant shear rate at 50 1/s for 1 min
Step 4 is shear rate ramp from 50 to 2 1/s over 3 mins

Only step 4 is analysed to extract the Casson parameters. Data analysed is from 50 1/s to 5 1/s. Square root of stress is plotted on the y-axis and square root of shear rate is plotted on the x-axis. The square of the slope gives the Casson viscosity and the square of the intercept gives the Casson yield.

### Examples 1 to 3:

Frozen confection coating compositions having the composition according to Table 1 were prepared according to the General Method 1.

Casson viscosity and Casson yield were measured according to General Method 3.

Coated frozen confection products were prepared and coating thickness was measured according to General Method 2.

**Table 1: Frozen confection coating compositions comprising calcium carbonate**

| **Ingredient (wt%)** | **Example** | | | |
|---|---|---|---|---|
| | **Comparative** | **1** | **2** | **3** |
| Non-fat solids (excl. CaCO₃) | 47.7 | 28.2 | 32.1 | 39.8 |
| CaCO₃ [Dv₅₀ = 1.5 micron] | - | 18.5 | - | - |
| CaCO₃ [Dv₅₀ = 5 micron] | - | - | 20 | 11.8 |
| Emulsifier | 0.3 | 0.3 | 0.2 | 0.2 |
| Fat | 52 | 53 | 48 | 50 |
| SAFA | 26 | 26.5 | 23 | 25 |

| **Properties:** | | | | |
|---|---|---|---|---|
| Kcal (per 100 g) | (ca.) 656 | 585 | 555 | 604 |
| Calorie reduction | 0% | 10.8% | 15.4% | 7.9% |
| Casson Viscosity (Pa.s) | 0.19 | 0.10 | 0.12 | 0.15 |
| Casson Yield (Pa) | 0.11 | 0.72 | 0.21 | 0.18 |
| Reduction in pick-up weight | 0% | 6.9% | 17.2% | 5.7% |
| Variation in coating thickness | 40% | 11.4% | 24.5% | Not measured |
| Reduction in volume | 0% | 6.6% | 9.2% | 4.0% |
| Brittleness | yes | yes | yes | yes |

Table 1 illustrates that fat-based confection compositions comprising from 1 wt% to 40 wt% calcium carbonate, from 35 wt% to 65 wt% fat, from 20 wt% to 45 wt% sugar and from 2 wt% to 15 wt% cocoa powder, from 0.05 wt% to 1.0 wt% emulsifier and wherein the calcium carbonate has a median particle diameter size (D₅₀) of from 1.2 microns to 8 microns have a significantly reduced Casson viscosity and significantly increased Casson yield.

For instance, Example 1, a fat-based confection composition comprising 18.5 wt% calcium carbonate having a median particle diameter size (Dv₅₀) of 1.5 microns, has a reduced Casson viscosity of 0.10 Pa.S compared to 0.19 Pa.S of the comparative example, and a significantly increased Casson yield of 0.72 Pa in comparison to 0.11 Pa of the comparative example.

Significantly reducing the Casson viscosity and significantly increasing the Casson yield of a fat-based confection composition results in reduction of the pick-up weight of the fat-based confection composition, and consequently a reduction in the total amount of composition present per coated frozen confection product. Comparison of the comparative example and examples 2 and 3 demonstrate that an increase in calcium carbonate content of a fat-based confection composition of from 0 wt% (comparative example) to 11.8 wt % (example 3) or 20 wt% (example 2), results in a decrease in pick-up weight of the fat-based confection composition per product, e.g. 5.7% (example 3) and 17.2% (example 2), respectively.

Coated frozen confection products that comprise less fat-based confection composition have a lower calorie content contributed to by the confection composition because there is less frozen confection composition present per coated frozen confection product. The calorie content of the compositions of examples 1 to 3 is reduced by from 10.8%, 15.4% and 7.9%, respectively, in comparison to the comparative example that does not comprise calcium carbonate.

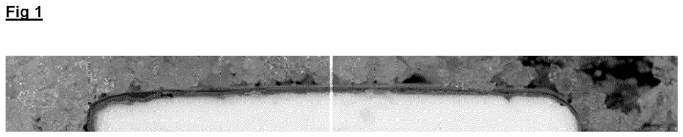

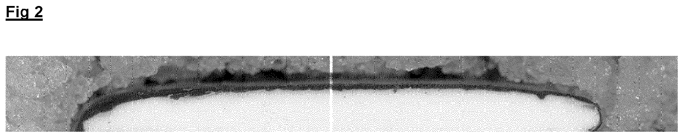

An additional advantage of a fat-based confection composition comprising calcium carbonate having a volume median particle diameter size (Dᵥ₅₀) of from 1.2 microns to 8 microns is that, even though there is less fat-based confection composition present per product, the uniformity of the coating is significantly improved compared to the fat-based confection compositions without calcium carbonate, i.e. the comparative example. This is demonstrated by the 40% variation in thickness of a coating composition that does not comprise calcium carbonate compared to an 11% variation in thickness of a fat-based confection composition comprising 18.5 wt% calcium carbonate having a median particle diameter size (Dᵥ₅₀) of 1.5 microns (example 1). Furthermore, as demonstrated by Figs 1 and 2, the definition of the contours of the coated frozen confection product significantly increased. Figs 1 and 2 illustrate that, although the volume of the fat-based confection composition is reduced, the coating is more uniform and enables an improved definition of the contours of the coated frozen confection product's shape. It is believed that the opacity of the fat-based confection composition is increased by the addition of calcium carbonate.

### Examples 4 to 13

Examples 4 to 13 were prepared following General Method 1 The compositions comprise calcium carbonate as provided in Table 2. All examples comprise calcium carbonate with a volume median particle diameter size (Dᵥ₅₀) of 1.5 microns. Rheology of the compositions of Examples 4 to 13 was measured according to General Method 3.

Table 2 demonstrates that the addition of calcium carbonate having a median particle diameter size (D₅₀) of 1.5 microns to a fat-based confection composition reduces the Casson viscosity of the fat-based confection composition and increases the Casson yield of the fat-based confection composition. Table 2 demonstrates that increasing the amount of calcium carbonate present in a fat-based confection composition correspondingly decreases the Casson viscosity and increases the Casson yield.

**Table 2: Frozen confection coating compositions comprising varying amounts of calcium carbonate and corresponding rheological values.**

| **Example** | **CaCO₃ (wt %)** | **Casson Viscosity (Pa.s)** | **Casson Yield (Pa)** |
|---|---|---|---|
| **4** | 5 | 0.13 | 0.56 |
| **5** | 7.5 | 0.12 | 0.66 |
| **6** | 10 | 0.12 | 0.73 |
| **7** | 12.5 | 0.12 | 0.81 |
| **8** | 15 | 0.11 | 0.85 |
| **9** | 17.5 | 0.11 | 0.87 |
| **10** | 20 | 0.11 | 0.89 |
| **11** | 25 | 0.10 | 0.95 |
| **12** | 30 | 0.10 | 1.02 |
| **13** | 40 | 0.09 | 1.24 |

### Examples 14 to 18

Table 3 illustrates that fat-based confection compositions comprising from 1 wt% to 40 wt% calcium carbonate, from 35 wt% to 65 wt% fat, from 20 wt% to 45 wt% sugar, from 2 wt% to 15 wt% cocoa powder, and from 10 wt % to 30 wt% saturated fatty acids, and wherein the calcium carbonate has a median particle diameter size (D₅₀) of from 1.2 microns to 8 microns have a greater breaking stress and stiffness than fat-based confection compositions that do not contain calcium carbonate.

**Table 3: Fat-based confection compositions comprising varying amounts of calcium carbonate and corresponding brittleness and stiffness values.**

| | **Example** | | | | |
|---|---|---|---|---|---|
| | **14** | **15** | **16** | **17** | **18** |
| CaCO₃ (wt%) | 0 | 18.5 | 18.5 | 18.5 | 0 |
| Fat content (wt%) | 53 | 53 | 53 | 53 | 53 |
| CaCO₃ Dᵥ₅₀ (microns) | - | 7.5 | 5 | 1.5 | - |
| Breaking stress (N/mm²) | 5.8 | 4.1 | 4.7 | 4.7 | 3.1 |
| Stiffness (N/mm²/sec) | 10.7 | 5.0 | 6.32 | 3.8 | 1.9 |
| SAFA (% of total fat) | 48 | 26.5 | 26.5 | 26.5 | 26.5 |

Example 14 demonstrates that a fat-based confection composition comprising a significant proportion of saturated fatty acid triglycerides (48 wt% of total fat) has a breaking stress of 5.8 N/mm² and a stiffness of 10.7 N/mm²/sec. Typically, breaking stress and stiffness must be lower than these values in order to prevent fat-based confection compositions in solid form breaking on touch.

Examples 14 to 18 demonstrate that fat-based confection compositions comprising calcium carbonate have increased breaking stress and stiffness of the fat-based confection compositions in solid form. For instance, Examples 15 to 17 are fat-based confection compositions that comprise 18.5 wt% calcium carbonate having a median particle diameter size (D₅₀) of 7.5, 5 and 1.5 microns, respectively. These examples all have a greater breaking stress and stiffness when compared to Example 18, a fat-based confection composition with the same fat and SAFA content that does not comprise calcium carbonate.

An increase in the breaking stress and stiffness of a fat-based confection composition, when used as a coating for a frozen confection, results in a coating having a 'snap' when broken and, consequently, an audible crack when bitten by a consumer.

Examples 14 to 18 demonstrate that fat-based confection compositions comprising calcium carbonate have sufficient brittleness and stiffness values that enable the preparation of fat-based confection composition comprising low saturated fatty acid triglycerides, for example 26.5 wt%, that have the same or improved 'snap' and audible crack when bitten by a consumer.

Consequently, the addition of 1 wt% to 40 wt% calcium carbonate having a median particle diameter size (Dᵥ₅₀) of from 1.2 microns to 8 microns to a fat-based confection composition results in a greater breaking stress than a coating composition that does not contain calcium carbonate. An increase in brittleness and stiffness allows a reduction in SAFA content of the coating composition whilst retaining the physical and sensorial characteristics of the coating composition when present as part of a coated frozen confection product.

## Claims

1. A fat-based confection composition comprising:
• from 35 wt% to 65 wt% fat;
• from 35 wt% to 65 wt% non-fat solid particles, wherein the non-fat solid particles comprise calcium carbonate;
• from 10 wt% to 35 wt% SAFA; and
• from 0.05 wt% to 1.0 wt% emulsifier;
wherein the fat-based confection composition comprises from 1 wt% to 40 wt% calcium carbonate, and the calcium carbonate has a median particle size diameter (D₅₀) of from 1.2 microns to 8 microns and does not comprise surface reacted calcium carbonate having a specific surface area of from 15 m²/g to 200 m²/g.

2. A fat-based confection composition as claimed in claim 1, comprising from 5 wt% to 45 wt% sugar and from 2 wt% to 15 wt% cocoa powder, wherein the non-fat solid particles comprise the sugar and the cocoa powder.

3. A fat-based confection composition as claimed in claim 1 or claim 2, wherein the calcium carbonate has a mean diameter particle size of from 1.3 microns to 6 microns.

4. A fat-based confection composition as claimed in any one of claims 1 to 3 comprising from 10 wt% to 30 wt% calcium carbonate.

5. A fat-based confection composition as claimed in any one of claims 1 to 4 comprising from 20 wt% to 30 wt% SAFA.

6. A fat-based confection composition as claimed in any one of claims 1 to 5, wherein the fat is selected from the group consisting of palm oil, palm oil fractions, cocoa butter, coconut oil, high oleic liquid oils, sunflower oil, olive oil, and mixtures thereof.

7. A fat-based confection composition as claimed in any one of claims 1 to 6, wherein the sugar is selected from the group consisting of monosaccharides, disaccharides, and mixtures thereof.

8. A fat-based confection composition as claimed in any one of claims 1 to 7, wherein the Casson viscosity of the composition is from 0.05 Pa.s to 0.50 Pa.s measured at 40°C.

9. A fat-based confection composition as claimed in any one of claims 1 to 8, wherein the Casson yield of the composition is from 0.05 Pa to 5.0 Pa measured at 40°C.

10. A fat-based confection composition as claimed in any one of claims 1 to 9, wherein the volume of the fat-based confection composition is from 0.55 ml to 0.98 ml per gram.

11. Use of a fat-based confection composition as claimed in any one of claims 1 to 10 for coating a frozen confection or bakery item.

12. Use as claimed in claim 11, wherein the fat-based confection composition is applied by dipping or spraying.

13. A confection product comprising a fat-based confection composition as claimed in any one of claims 1 to 10.

14. A confection product as claimed in claim 13, wherein the confection product is frozen and comprises a frozen confection and the fat-based confection composition.

15. A confection product as claimed in claim 13 or claim 14, wherein the confection product is frozen and comprises a bakery item and the fat-based confection composition.

## Patentansprüche

1. Fettbasierte Süßwaren-Zusammensetzung, umfassend:
• von 35 Gew.-% bis 65 Gew.-% Fett;
• von 35 Gew.-% bis 65 Gew.-% fettfreie Feststoffpartikel, wobei die fettfreien Feststoffpartikel Calciumcarbonat umfassen;
• von 10 Gew.-% bis 35 Gew.-% SAFA; und
• von 0,05 Gew.-% bis 1,0 Gew.-% Emulgator;
wobei die fettbasierte Süßwaren-Zusammensetzung von 1 Gew.-% bis 40 Gew.-% Calciumcarbonat umfasst und das Calciumcarbonat einen mittleren Partikelgrößendurchmesser (D₅₀) von 1,2 Mikrometern bis 8 Mikrometern aufweist und kein oberflächenreagiertes Calciumcarbonat mit einer spezifischen Oberfläche von 15 m²/g bis 200 m²/g umfasst.

2. Fettbasierte Süßwaren-Zusammensetzung nach Anspruch 1, umfassend von 5 Gew.-% bis 45 Gew.-% Zucker und von 2 Gew.-% bis 15 Gew.-% Kakaopulver, wobei die fettfreien Feststoffpartikel den Zucker und das Kakaopulver umfassen.

3. Fettbasierte Süßwaren-Zusammensetzung nach Anspruch 1 oder Anspruch 2, wobei das Calciumcarbonat einen mittleren Durchmesser der Partikelgröße von 1,3 Mikrometern bis 6 Mikrometern aufweist.

4. Fettbasierte Süßwaren-Zusammensetzung nach einem der Ansprüche 1 bis 3, die von 10 Gew.-% bis 30 Gew.-% Calciumcarbonat umfasst.

5. Fettbasierte Süßwaren-Zusammensetzung nach einem der Ansprüche 1 bis 4, die von 20 Gew.-% bis 30 Gew.-% SAFA umfasst.

6. Fettbasierte Süßwaren-Zusammensetzung nach einem der Ansprüche 1 bis 5, wobei das Fett aus der Gruppe ausgewählt ist, bestehend aus Palmöl, Palmölfraktionen, Kakaobutter, Kokosnussöl, flüssigen Ölen mit hohem Ölsäuregehalt, Sonnenblumenöl, Olivenöl und Mischungen davon.

7. Fettbasierte Süßwaren-Zusammensetzung nach einem der Ansprüche 1 bis 6, wobei der Zucker aus der Gruppe ausgewählt ist, bestehend aus Monosacchariden, Disacchariden und Mischungen davon.

8. Fettbasierte Süßwaren-Zusammensetzung nach einem der Ansprüche 1 bis 7, wobei die Casson-Viskosität der Zusammensetzung gemessen bei 40 °C zwischen 0,05 Pa.s und 0,50 Pa.s liegt.

9. Fettbasierte Süßwaren-Zusammensetzung nach einem der Ansprüche 1 bis 8, wobei die Casson-Fließgrenze der Zusammensetzung gemessen bei 40 °C zwischen 0,05 Pa und 5,0 Pa liegt.

10. Fettbasierte Süßwaren-Zusammensetzung nach einem der Ansprüche 1 bis 9, wobei das Volumen der fettbasierten Süßwaren-Zusammensetzung zwischen 0,55 ml und 0,98 ml pro Gramm liegt.

11. Verwendung einer fettbasierten Süßwaren-Zusammensetzung nach einem der Ansprüche 1 bis 10 zum Überziehen einer gefrorenen Süßware oder eines Backwarenartikels.

12. Verwendung nach Anspruch 11, wobei die fettbasierte Süßwaren-Zusammensetzung durch Eintauchen oder Sprühen aufgebracht wird.

13. Süßwarenprodukt, umfassend eine fettbasierte Süßwaren-Zusammensetzung nach einem der Ansprüche 1 bis 10.

14. Süßwarenprodukt nach Anspruch 13, wobei das Süßwarenprodukt gefroren ist und eine gefrorene Süßware und die fettbasierte Süßwaren-Zusammensetzung umfasst.

15. Süßwarenprodukt nach Anspruch 13 oder Anspruch 14, wobei das Süßwarenprodukt gefroren ist und einen Backwarenartikel und die fettbasierte Süßwaren-Zusammensetzung umfasst.

## Revendications

1. Composition de confiserie à base de matière grasse comprenant :
• de 35 % en poids à 65 % en poids de matière grasse ;
• de 35 % en poids à 65 % en poids de particules solides non grasses, dans laquelle les particules solides non grasses comprennent du carbonate de calcium ;
• de 10 % en poids à 35 % en poids de SAFA ; et
• de 0,05 % en poids à 1,0 % en poids d'émulsifiant ;
dans laquelle la composition de confiserie à base de matière grasse comprend de 1 % en poids à 40 % en poids de carbonate de calcium, et le carbonate de calcium présente un diamètre médian des particules (D₅₀) de 1,2 micromètre à 8 micromètres et ne comprend pas de carbonate de calcium ayant subi une réaction de surface et présentant une surface spécifique de 15 m²/g à 200 m²/g.

2. Composition de confiserie à base de matière grasse selon la revendication 1, comprenant de 5 % en poids à 45 % en poids de sucre et de 2 % en poids à 15 % en poids de poudre de cacao, dans laquelle les particules solides non grasses comprennent le sucre et la poudre de cacao.

3. Composition de confiserie à base de matière grasse selon la revendication 1 ou la revendication 2, dans laquelle le carbonate de calcium présente un diamètre moyen des particules de 1,3 micromètre à 6 micromètres.

4. Composition de confiserie à base de matière grasse selon l'une quelconque des revendications 1 à 3, comprenant de 10 % en poids à 30 % en poids de carbonate de calcium.

5. Composition de confiserie à base de matière grasse selon l'une quelconque des revendications 1 à 4 comprenant de 20 % en poids à 30 % en poids de SAFA.

6. Composition de confiserie à base de matière grasse selon l'une quelconque des revendications 1 à 5, dans laquelle la matière grasse est choisie dans le groupe constitué d'huile de palme, de fractions d'huile de palme, de beurre de cacao, d'huile de coco, d'huiles liquides à haute teneur en acide oléique, d'huile de tournesol, d'huile d'olive et de mélanges de ceux-ci.

7. Composition de confiserie à base de matière grasse selon l'une quelconque des revendications 1 à 6, dans laquelle le sucre est choisi dans le groupe constitué de monosaccharides, de disaccharides et de mélanges de ceux-ci.

8. Composition de confiserie à base de matière grasse selon l'une quelconque des revendications 1 à 7, dans laquelle la viscosité de Casson de la composition est de 0,05 Pa.s à 0,50 Pa.s mesurée à 40 °C.

9. Composition de confiserie à base de matière grasse selon l'une quelconque des revendications 1 à 8, dans laquelle la contrainte seuil de Casson de la composition est de 0,05 Pa à 5,0 Pa mesurée à 40 °C.

10. Composition de confiserie à base de matière grasse selon l'une quelconque des revendications 1 à 9, dans laquelle le volume de la composition de confiserie à base de matière grasse est de 0,55 ml à 0,98 ml par gramme.

11. Utilisation d'une composition de confiserie à base de matière grasse selon l'une quelconque des revendications 1 à 10 pour l'enrobage d'une confiserie glacée ou d'un produit de boulangerie.

12. Utilisation selon la revendication 11, dans laquelle la composition de confiserie à base de matière grasse est appliquée par trempage ou par pulvérisation.

13. Produit de confiserie comprenant une composition de confiserie à base de matière grasse selon l'une quelconque des revendications 1 à 10.

14. Produit de confiserie selon la revendication 13, dans lequel le produit de confiserie est glacé et comprend une confiserie glacée et la composition de confiserie à base de matière grasse.

15. Produit de confiserie selon la revendication 13 ou la revendication 14, dans lequel le produit de confiserie est glacé et comprend un produit de boulangerie et la composition de confiserie à base de matière grasse.
